# EUROPÄISCHE PATENTANMELDUNG

(11) **EP 4 497 498 A1**
(43) Veröffentlichungstag der Anmeldung: **29.01.2025**
(21) Anmeldenummer: 23187727.5
(22) Anmeldetag: 26.07.2023
(51) Int. Cl.: B01J 19/32, B33Y 80/00

(54) **STRUKTURIERTE PACKUNG FÜR EINE KOLONNE**

(71) Anmelder: BASF SE, 67056 Ludwigshafen am Rhein (DE); Technische Universität München, 80333 München (DE); Universität Ulm, 89081 Ulm (DE)
(72) Erfinder: Neukaeufer, Johannes, 45739 Oer-Erkenschwick (DE); Rausch, Nadin, 80333 München (DE); Ashour, Adel, 91369 München (DE); Gruetzner, Thomas, 78244 Gottmadingen-Bietingen (DE); Rehfeldt, Sebastian, 80333 München (DE); Klein, Harald, 80333 München (DE); Paschold, Juergen, 67056 Ludwigshafen am Rhein (DE); Hallmann, Heiko, 67056 Ludwigshafen am Rhein (DE); Fischer, Andreas Helmut Peter, 34225 Baunatal (DE); Meinicke, Sebastian Dietrich, 76199 Karlsruhe (DE); Knoesche, Carsten, 67056 Ludwigshafen am Rhein (DE)
(74) Vertreter: BASF IP Association

(57) **Zusammenfassung**

Die Erfindung betrifft eine strukturierte Packung für eine Kolonne, wobei die Packung ein Gitter aus Stegen (1, 2) umfasst, die unmittelbar und/oder über Verbindungselemente (3) miteinander verbunden sind, der äußere Rand der Packung zumindest abschnittsweise von Randstegen (2) gebildet ist, die nach unten geneigt ins Innere der Packung verlaufen und an ihrem den Rand der Packung bildenden äußeren Ende eine sich in Umfangsrichtung erstreckende Verbreiterung (5) aufweisen. Weiterhin umfasst die Erfindung eine mit einer strukturierten Packung ausgestattete Kolonne.

## Beschreibung

Die Erfindung betrifft eine strukturierte Packung für eine Kolonne, wobei die Packung ein Gitter aus miteinander verbundenen Stegen umfasst, sowie eine mit einer strukturierten Packung ausgestattete Kolonne.

Die Rektifikation gilt als eines der wichtigsten thermischen Trennverfahren. Das Prinzip zur Abtrennung von Komponenten aus einem Gemisch beruht auf den unterschiedlichen Siedepunkten der Komponenten. Die Rektifikation wird in Kolonnen durchgeführt, in denen eine Dampfphase und eine flüssige Phase im Gegenstrom fließen. Die Trennung erfolgt unter Ausnutzung der sich im Gleichgewicht einstellenden Konzentrationsunterschiede in der Flüssigphase und Dampfphase, indem beide Phasen im Gegenstrom geführt werden. In den Kolonnen sind Einbauten vorgesehen, die einen Stoff- und Wärmeaustausch zwischen den Phasen sicherstellen, so dass sich die leichter siedenden Komponenten in der Dampfphase anreichern und durch den Dampfstrom zum Kopf der Kolonne geführt werden, während sich die schwerer siedenden Komponenten in der flüssigen Phase anreichern und durch den Flüssigkeitsstrom zum Boden der Kolonne gebracht werden. Die Einbauten werden nach ihrer Bauart und Funktionsweise unterschieden in Böden und Packungen. Letztere unterteilen sich in Füllkörperschüttungen und strukturierte Packungen.

Die Auslegung solcher Kolonnen nebst ihren Einbauten erfolgt heutzutage typischerweise modellgestützt in kommerziell erhältlichen Simulationswerkzeugen. Um die mathematischen Modelle an die Realität anzupassen, ist es meist erforderlich, die Modelle anhand von Messdaten zu parametrieren. Liegen keine Betriebserfahrungen vor, sind oft validierende Laborexperimente erforderlich, um die entsprechenden Messdaten zu ermitteln. Dabei skalieren die mit den Experimenten verbundenen Kosten mit der Größe der verwendeten Laborkolonnen. Ursachen hierfür sind hauptsächlich die steigenden Aufwendungen für zu ergreifende Sicherheitsmaßnahmen und die Bereitstellung entsprechender Mengen der zu trennenden Chemikalien.

Es wird daher angestrebt, die Apparate, insbesondere die Kolonnen, so klein wie möglich zu halten. Ein weiterer Anlass zur Minimierung der Apparatedimensionen sind die häufig anzutreffenden begrenzten räumlichen Möglichkeiten zum Aufbau von Anlagen im Labormaßstab. Eine Reduzierung der Kolonnenabmessungen ist jedoch mit einigen Problemen verbunden. So nehmen mit kleiner werdendem Durchmesser die Effekte von Nichtidealitäten zu. Dies betrifft insbesondere Wärmeverluste, Wärmeträgheit und die Flüssigkeitsverteilung über die innere Oberfläche. Besonders die gleichmäßige Benetzung von Wandoberfläche und der Oberfläche der eingesetzten Trennstrukturen wie Füllkörper oder strukturierte Packungen ist ausschlaggebend für die Trennleistung der Kolonne. Mit abnehmendem Durchmesser wird auch der Wandeinfluss zunehmend zu einem Problem. Vergrößert sich beispielsweise der Anteil der von oben nach unten strömenden Flüssigkeit, der an der Wand entlang fließt, im Vergleich zu dem Anteil, der über die Trenneinbauten strömt, führt dies zu einer abnehmenden Trennleistung der Packung und somit auch der gesamten Trennkolonne. Ein weiteres Problem stellt die Reproduzierbarkeit von Messergebnissen dar, die mit zunehmender Verkleinerung der Apparatedimensionen sinkt. Für die Auslegung von Bauteilen und Anlagen im Produktionsmaßstab bedeutet das, dass die Bauteile und Anlagen aufgrund von erforderlichen Sicherheitszuschlägen häufig größer dimensioniert werden, als dies bei genaueren Messergebnissen erforderlich wäre.

Um dem Problem der randgängigen Flüssigkeit zu begegnen, sind aus dem Stand der Technik sogenannte Randabweiser bekannt. Die Dokumente DE 101 22 189 C1 und DE 10 2004 021 984 A1 beschreiben entsprechende Systeme, bei denen eine entlang des Umfangs der Kolonnen-Innenwand umlaufende Struktur entweder an der Kolonnenwand oder an der Packung befestigt und derart gestaltet ist, dass an der Wand nach unten fließende Flüssigkeit von der Struktur aufgefangen und in Richtung der Packung geleitet wird. In industriellen Kolonnen im Produktionsmaßstab führen derartige Maßnahmen zur Steigerung der Trennleistung. Im kleineren Maßstab, insbesondere im Labormaßstab, hat sich jedoch gezeigt, dass die Probleme der Reproduzierbarkeit und Skalierbarkeit mit derlei Maßnahmen nicht zufriedenstellend gelöst werden können.

Es ist eine Aufgabe der Erfindung, strukturierte Packungen für Kolonnen bereitzustellen, die eine höhere Reproduzierbarkeit der unter Verwendung dieser Packungen erhaltenen experimentellen Ergebnisse ermöglichen. Eine weitere Aufgabe der Erfindung ist es, strukturierte Packungen für Kolonnen bereitzustellen, die es ermöglichen, auf Basis von unter Verwendung dieser Packungen erhaltenen experimentellen Ergebnisse verlässlichere und genauere Auslegungen von Bauteilen und Anlagen in größerem Maßstab vorzunehmen. Eine weitere Aufgabe der Erfindung ist es, die Dimensionen von strukturierten Packungen für Kolonnen weiter zu verringern, ohne dabei die vorgenannten Ziele der Reproduzierbarkeit und Skalierbarkeit zu gefährden.

Diese Aufgaben werden erfindungsgemäß gelöst durch eine strukturierte Packung gemäß Anspruch 1 sowie eine Kolonne gemäß Anspruch 9. Vorteilhafte Ausgestaltungen der Erfindungsgegenstände sind in den Ansprüchen 2 bis 8 und 10 angegeben.

Ein erster Gegenstand der Erfindung ist eine strukturierte Packung für eine Kolonne, wobei die Packung ein Gitter aus Stegen umfasst, die unmittelbar und/oder über Verbindungselemente miteinander verbunden sind, der äußere Rand der Packung zumindest abschnittsweise von Randstegen gebildet ist, die nach unten geneigt ins Innere der Packung verlaufen und an ihrem den Rand der Packung bildenden äußeren Ende eine sich in Umfangsrichtung erstreckende Verbreiterung aufweisen. Die Formulierung "und/oder" ist in diesem Zusammenhang so zu verstehen, dass Stege unmittelbar miteinander verbunden sind, Stege über Verbindungselemente miteinander verbunden sind, oder ein Teil der Stege unmittelbar und ein anderer Teil der Stege über Verbindungselemente miteinander verbunden sind. Die Stege können auch an einem ihrer Enden unmittelbar und am anderen Ende über Verbindungselemente miteinander verbunden sein.

Ein weiterer Gegenstand der Erfindung ist eine Kolonne umfassend mindestens eine erfindungsgemäße strukturierte Packung, bei der die Randstege an ihrem äußeren Rand mit der inneren Mantelfläche der Kolonne verbunden sind.

### Definitionen

Unter dem Begriff der "Kolonne" wird gemäß der im Stand der Technik üblichen Auffassung ein zumindest abschnittsweise zylindrischer Apparat mit einer Längsachse verstanden, der zur thermischen Stofftrennung eingesetzt werden kann. Unter dem Begriff "axial" wird die Ausrichtung parallel zur Längsachse der Kolonne verstanden. Der Begriff "in Umfangsrichtung" meint eine Richtung oder Ausdehnung entlang des Umfangs des zylindrischen Körpers, insbesondere entlang des Umfangs des Kolonnenmantels, sofern nichts Gegenteiliges angegeben ist. Der Querschnitt einer Kolonne kann jede zweckmäßige Form annehmen. Vorzugsweise ist der Querschnitt kreisförmig. Die Querschnittsfläche bzw. der Durchmesser der Kolonne kann in Richtung der Längsachse gleichbleiben oder variieren.

Hier und im Folgenden werden die Begriffe "Stege" und "Randstege" so verstanden, dass Randstege eine besondere Art von Stegen sind. Allgemeine Aussagen zu Stegen, beispielsweise die Materialwahl, Geometrie, Form, Größe oder Herstellverfahren gelten sinngemäß auch für Randstege, sofern sich aus dem Zusammenhang nichts Gegenteiliges ergibt. Der wesentliche Unterschied zwischen Stegen und Randstegen besteht darin, dass Randstege Teile des äußeren Randes der Packung sind und an ihrem den Rand der Packung bildenden äußeren Ende eine sich in Umfangsrichtung erstreckende Verbreiterung aufweisen.

Unter dem Begriff der "Verbindung" bzw. "verbunden" wird verstanden, dass die betreffenden Bauteile an mindestens einer Stelle in Kontakt zueinander stehen und es keinen Zwischenraum zwischen den Bauteilen an den betreffenden Stellen gibt. Eine Verbindung kann auf unterschiedlich Arten realisiert sein, beispielsweise formschlüssig, kraftschlüssig, stoffschlüssig oder durch Kombinationen daraus. Unter dem Begriff "integral" wird in Bezug auf eine Verbindung oder Herstellungsmethode verstanden, dass die betreffenden Bauteile untrennbar miteinander verbunden sind. Eine integrale Verbindung kann beispielsweise dadurch zustande kommen, dass zwei Bauteile gemeinsam gefertigt und bei der Fertigung bereits miteinander verbunden werden, z.B. in einem additiven Fertigungsverfahren wie dem 3D-Druck.

### Bevorzugte Ausführungsformen

Die erfindungsgemäße strukturierte Packung ist grundsätzlich für alle Einsatzbereiche strukturierter Packungen geeignet. Besonders vorteilhaft kann die strukturierte Packung im Labormaßstab eingesetzt werde, da dort ihre vorteilhaften Eigenschaften besonders zum Tragen kommen. In einer Ausführungsform beträgt der Außendurchmesser der Packung daher von 5 mm bis 30 mm, bevorzugt von 10 mm bis 25 mm. Die Höhe der Packung beträgt vorteilhaft von 3 cm bis 100 cm, bevorzugt von 5 cm bis 60 cm, besonders bevorzugt von 10 cm bis 40 cm.

Dementsprechend beträgt in einer Ausführungsform der Innendurchmesser der Kolonne von 5 mm bis 30 mm, bevorzugt von 10 mm bis 25 mm. Die Wandstärke der Kolonne beträgt vorzugsweise von 0,4 mm bis 3 mm, bevorzugt von 0,5 bis 1 mm.

Die Stege und/oder die Randstege können jede Form und Dimension aufweisen, die zum Transport von daran entlang fließender Flüssigkeit geeignet ist. Die Stege und/oder Randstege können beispielsweise gerade oder gekrümmt sein. Vorzugsweise weisen sie in Längsrichtung eine größere Ausdehnung auf als in Querrichtung senkrecht zur Längsrichtung. Die Längsausdehnung wird im Folgenden auch als "Länge" bezeichnet, die Querausdehnung als "Breite". Die Ausdehnung in die dritte, zur Längsausrichtung und zur Querausdehnung orthogonale, Raumrichtung, wird als "Dicke" oder "Stärke" der Stege bezeichnet. In einer Ausgestaltung sind die Stege und/oder Randstege stabförmig. In einer Variante sind sie doppelstabförmig, indem zwei stabförmige Gebilde nebeneinander in einem Abstand zueinander verlaufen. In einer weiteren Ausgestaltung sind sie plattenförmig, wobei ihre Breite größer ist als ihre Dicke.

Die Stege und/oder Randstege können über ihre Länge einen konstanten oder einen variablen Querschnitt aufweisen. Die Breite und/oder die Dicke kann über die Länge konstant oder variabei sein. In einer Ausführungsform verjüngen sich die Randstege in Richtung des Packungsinneren, sodass ihre Breite in Richtung des Packungsinneren abnimmt, vorzugsweise kontinuierlich abnimmt.

In einer Ausführungsform ist die nach oben weisende Oberfläche der Randstege quer zu ihrer nach unten geneigten Verlaufsrichtung von der Mittellinie der Oberfläche zu ihren Seiten hin nach unten geneigt.

Die Randstege weisen vom Rand der Packung in Richtung des Packungsinneren eine Neigung nach unten auf, damit Flüssigkeit, die von der Innenwand des Kolonnenmantels auf die Randstege fließt, zuverlässig ins Innere der Packung geleitet wird. Der Neigungswinkel kann für alle Randstege oder für Gruppen von Randstegen gleich oder unterschiedlich sein. In einer Ausführungsform beträgt die Neigung der Randstege in Richtung des Packungsinneren gegenüber der Horizontalen von 1° bis 75°, bevorzugt von 10° bis 45°. In einer Ausgestaltung dieser Ausführungsform nimmt die Neigung vom Rand der Packung in Richtung des Packungsinneren zu, sodass die Stege am Rand eine gegenüber der Horizontalen geringere Neigung aufweisen als im Inneren der Packung. In einer weiteren Ausgestaltung dieser Ausführungsform nimmt die Neigung vom Rand der Packung in Richtung des Packungsinneren ab, sodass die Stege am Rand eine gegenüber der Horizontalen größere Neigung aufweisen als im Inneren der Packung.

Die Randstege weisen an ihrem den Rand der Packung bildenden äußeren Ende eine sich in Umfangsrichtung erstreckende Verbreiterung auf. Diese Verbreiterung kann auf unterschiedliche Arten realisiert sein, beispielsweise hinsichtlich ihrer Dimensionen, Form und Anordnung an der Innenwand des Kolonnenmantels.

In einer Ausführungsform entspricht das äußere Ende der Verbreiterung eines Randstegs in Umfangsrichtung dem 0,05-Fachen bis 0,3-Fachen, bevorzugt dem 0,09-Fachen bis 0,25-Fachen des Umfangs der äußeren Umhüllenden um die Packung.

In einer Ausführungsform weisen die Randstege an ihrem äußeren Ende Auskragungen auf, die sich in Umfangsrichtung zu beiden Seiten der Randstege erstrecken. Vorzugsweise befinden sich die Enden der Auskragungen in axialer Richtung oberhalb der Basis der Randstege, sodass von der Innenwand des Kolonnenmantels nach unten strömende Flüssigkeit von den Auskragungen aufgefangen und in Richtung des jeweiligen Randstegs geleitet wird.

Die Verbreiterungen können symmetrisch zur Basis des Randstegs gestaltet sein, beispielsweise in Hinsicht auf ihre Dimensionen, Formen und/oder ihrem Verlauf in Umfangsrichtung. Sie können aber auch asymmetrisch gestaltet sein.

In einer Ausführungsform beträgt die Ausdehnung des verbreiterten Endes der Randstege in Umfangsrichtung das 1,1-Fache bis 3-Fache, bevorzugt das 1,5-Fache bis 2,5-Fache der Breite der Randstege an ihrem dem Packungsinneren zugewandten Ende.

Die Oberflächen der Stege können auf den jeweiligen Anwendungsfall angepasst sein. In einer Ausführungsform sind die Oberflächen glatt. Eine glatte Oberfläche kann beispielsweise dadurch erzielt werden, dass die Packung nach ihrer Herstellung einem weiteren Verarbeitungsschritt unterzogen wird, beispielsweise einem Verarbeitungsschritt des Strömungsschleifens, bei dem die Packungsoberflächen mit abrasivem Material umströmt werden. Eine glatte Oberfläche wird vorzugsweise dann gewählt, wenn die in der Packung zu behandelnde Flüssigkeit Neigungen zur Bildung von Ablagerungen oder sogenanntem Fouling aufweist.

In einer anderen Ausführungsform weist die Oberfläche der Stege eine fertigungsbedingte Rauheit auf. "Fertigungsbedingt" bedeutet in diesem Zusammenhang, dass die Oberflächen nach ihrer Herstellung eine Mikrostruktur aufweisen, die durch das zur Fertigung verwendete Material und das Fertigungsverfahren bedingt ist. Ein Beispiel ist die Herstellung von Packungen durch additive Fertigung, bei der die Mikrostruktur von dem eingesetzten Kunststoff oder Metall sowie von den Parametern des zum Verschmelzen der Materialpartikel aufgewandten Energieeintrags abhängen.

In einer weiteren Ausführungsform weist die Oberfläche der Stege eine gezielt hergestellte Strukturierung auf. Die Strukturierung kann beispielsweise Strukturelemente wie Erhebungen oder Vertiefungen umfassen, die als Linien, Kurven oder Einzelelemente, z.B. punktförmig, auf oder in der Oberfläche angebracht sind. Die Strukturierung kann vorteilhaft genutzt werden, die Strömungsverhältnisse pro Steg weiter zu optimieren, beispielsweise indem auf dem Steg entlangströmende Flüssigkeit gezielt in bestimmte Bereiche der Packung gelenkt wird.

In einer Ausführungsform sind mehrere Stege und mehrere Randstege in mindestens zwei Gruppen übereinander und in Umfangsrichtung versetzt zueinander angeordnet, sodass über einem Steg, unter einem Steg oder sowohl über als auch unter einem Steg einer ersten Gruppe ein Randsteg einer zweiten Gruppe angeordnet ist. Dies hat den Vorteil, dass an der Innenwand des Kolonnenmantels herablaufende Flüssigkeit, die an einem ersten Randsteg vorbeiströmt, von einem darunter sich befindenden zweiten Randsteg aufgefangen werden kann.

Die äußere Gestalt der strukturierten Packung wird vorteilhaft an die Gegebenheiten angepasst, die sich beispielsweise aus dem Einbauort der Packung in einer Kolonne ergeben. In einer Ausführungsform weist der äußere Rand der Packung eine im Querschnitt runde, vorzugsweise kreisrunde Form auf. In einer Ausführungsform ist die Gitterstruktur der Packung n-zählig rotationssymmetrisch, wobei n eine natürliche Zahl von 2 bis 8, bevorzugt von 3 bis 6 ist.

In einer weiteren Ausführungsform weist der äußere Rand der Packung eine Querschnittsform auf, die aus Kreisbögen und Geraden zusammengesetzt ist, beispielsweise die Querschnittsform eines Halbkreises oder Viertelkreises. Eine derartige Gestalt ist beispielsweise dann vorteilhaft, wenn die Packung in einem geteilten Bereich einer Trennwandkolonne angeordnet ist.

In einer Kolonne können mehrere strukturierte Packungen gleicher und/oder unterschiedlicher Form angeordnet sein. So kann beispielsweise bei einer Trennwandkolonne, bei der eine Trennwand zwischen einem gemeinsamen Abtriebsteil und einem gemeinsamen Verstärkungsteil angeordnet ist, in jedem der Kolonnenabschnitte angeordnet sein.

Die strukturierte Packung kann auf unterschiedliche Arten hergestellt sein. In einer Ausführungsform werden die einzelnen Bestandteile der Packung, insbesondere Stege, Randstege und Verbindungselemente, separat gefertigt und anschließend miteinander verbunden. In einer anderen Ausführungsform werden die einzelnen Bestandteile der Packung gemeinsam hergestellt, vorzugsweise in einem Verfahren der additiven Fertigung. In einer weiteren Ausführungsform werden manche Bestandteile der Packung vorgefertigt bereitgestellt und anschließend während der Herstellung anderer Bestandteile mit diesen verbunden.

In einer Ausführungsform sind der Abschnitt der Kolonne, in dem die mindestens eine Packung angeordnet ist, und die mindestens eine Packung integral hergestellt, bevorzugt durch ein additives Fertigungsverfahren.

Additive Fertigungsverfahren, auch als generative Fertigungsverfahren oder 3D-Druck bezeichnet, sind aus dem Stand der Technik bekannt. Bei einem additiven Fertigungsverfahren wird das Material schichtweise aufgetragen, um ein Bauteil herzustellen. Bei Metallpulver oder Keramikpulver als Werkstoff werden beispielsweise Metallpulverpartikel oder Keramikpulverpartikel iterativ aufgebracht und durch Energieeintrag aufgeschmolzen, so dass das Bauteil schichtweise aufgebaut wird. Zu den gängigen Verfahren gehören das selektive Laserschmelzen (SLM), das selektive Lasersintern (SLS), das Binder-Jetting, Laser Metal Deposition (LMD), Fused Deposition Modelling (FDM), Stereolithographie (SLA), Multi Jet Fusion (MJF) und das Elektronenstrahlschmelzen (EBM).

In einer Ausführungsform ist das Material zur Herstellung der Packung und/oder der Kolonne aus der Gruppe der metallischen Werkstoffe, keramischen Werkstoffe oder kombinierten Metall-Keramik-Werkstoffe ausgewählt. Bevorzugt sind die metallischen Werkstoffe, die keramischen Werkstoffe oder die kombinierten Metall-Keramik-Werkstoffe geeignet, in einem additiven Fertigungsverfahren verarbeitet zu werden.

In einer Ausführungsform ist das Material ein metallischer Werkstoff, ausgewählt aus der Gruppe der Aluminiumlegierungen, Magnesiumlegierungen, Nickelbasislegierungen, Stahl, Edelstahl oder Werkzeugstahl. Wenn eine leichte Konstruktion erforderlich ist, werden Aluminiumlegierungen oder Magnesiumlegierungen bevorzugt. Wenn mechanische Festigkeit und Stabilität gefordert sind, wird Werkzeugstahl bevorzugt. Wenn die chemische Beständigkeit des ersten Werkstoffs von Bedeutung ist, werden rostfreier Stahl oder Nickelbasislegierungen bevorzugt.

In einer Ausführungsform ist das Material ein Werkstoff aus einem Kunststoff. Bevorzugte Kunststoffe für das Material sind Polylactide (polylactic acid), Polyamid (PA), insbesondere Polyamid 12 (Nylon), Epoxidharze, Acrylnitril-Butadien-Styrol (ABS), Polyetheretherketon (PEEK), High Impact Polystyrol (HIPS), Polyethylenterephthalat (PET), PET mit Glykol (PETG).

Es hat sich gezeigt, dass die erfindungsgemäße strukturierte Packung für Kolonnen eine hohe Reproduzierbarkeit der damit erzielbaren experimentellen Ergebnisse ermöglicht, was sich auch positiv auf die Skalierbarkeit der Strukturen auswirkt. Die bei einem Upscaling üblichen Sicherheitszuschläge konnten deutlich reduziert werden. Gleichzeitig konnten die Abmessungen der Packung, insbesondere ihr Außendurchmesser, sowie damit verbunden auch die Abmessungen der Kolonne weiter verringert werden, was zu einer Kostenersparnis und Erhöhung der intrinsischen Sicherheit führt.

### Detaillierte Beschreibung

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten, sofern sich aus der Beschreibung der Zeichnungen nichts Gegenteiliges ergibt. Es zeigen:
- Fig. 1:: Querschnitt einer Kolonne mit einer erfindungsgemäßen Packung in der Draufsicht;
- Fig. 2:: Längsschnitt einer Kolonne mit einer erfindungsgemäßen Packung in teilweise freigeschnittener Ansicht;
- Fig. 3:: Ansicht einer Ausführungsform eines Randsteges;
- Fig. 4:: Dreidimensionale Darstellungen von Abschnitten einer Packung (a) ohne und (b) mit Verbreiterungen an den Randstegen.
- Fig. 5:: Diagramm mit Ergebnissen von mit Packungen gemäß Fig. 4 durchgeführten Versuchen

### Bezugszeichenliste

- 1: Steg
- 2: Randsteg
- 3: Verbindungselement
- 4: Kolonnenmantel
- 5: Verbreiterung

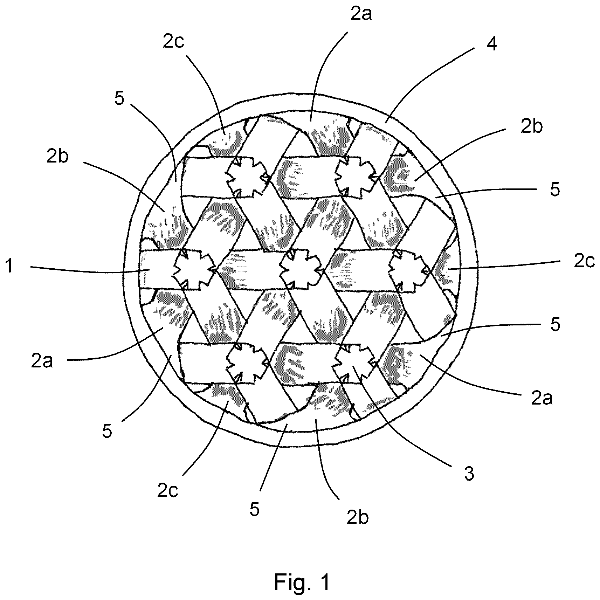

Fig. 1 zeigt in einer schematischen Darstellung eine Draufsicht auf einen Querschnitt durch eine Kolonne mit einer strukturierten Packung gemäß einer Ausführungsform der Erfindung. In einer kreisrunden zylindrischen Kolonne ist eine strukturierte Packung angeordnet. Die strukturierte Packung umfasst ein Gitter aus Stegen 1 und Randstegen 2, die über Verbindungselemente 3 miteinander verbunden sind. In dem dargestellten Beispiel verlaufen die Stege 1 und Randstege 2 in drei Raumrichtungen, die jeweils im Winkel von 60° zueinander stehen. Die Stege 1 und Randstege 2 verlaufen nach unten geneigt, was in Fig. 1 durch die gestrichelten Markierungen an jeweils einer Seite der Stege 1 und Randstege 2 angedeutet wird. Die markierten Enden befinden sich in Bezug auf die Längsachse der Kolonne weiter unten in der Packung als die nicht markierten Enden.

In der in Fig. 1 dargestellten beispielhaften Ausführungsform umfasst die strukturierte Packung in der dargestellten Schnittebene sieben Verbindungselemente 3, die gleichmäßig über den Querschnitt der Packung verteilt in Richtung der Kolonnenachse verlaufen. Von jedem Verbindungselement 3 gehen jeweils drei Stege 1 aus, die sich von dem jeweiligen Verbindungselement 3 in den drei unterschiedlichen Raumrichtungen nach unten zu einem anderen Verbindungselement 3 oder zur inneren Mantelfläche des Kolonnenmantels 4 erstrecken. Die in Fig. 1 sichtbaren Verbindungselemente 3, von denen die Stege 1 abgehen, liegen in der Querschnittsebene. Die Anordnung der von den Verbindungselementen 3 abgehenden Stege 1 wiederholt sich in axialer Richtung, also in die Zeichenebene in Fig. 1, sodass sich über die Höhe der Packung ein Gitter von sich durchdringenden Stegen 1 ergibt.

Neben den Stegen 1, die von Verbindungselementen 3 zur Innenfläche des Kolonnenmantels 4 und damit zum Rand der Packung verlaufen, wird der äußere Rand der Packung auch abschnittsweise von Randstegen 2 gebildet, die nach unten geneigt ins Innere der Packung verlaufen. Die Randstege 2 unterscheiden sich von den restlichen Stegen 1 dadurch, dass sie an ihrem den Rand der Packung bildenden äußeren Ende eine sich in Umfangsrichtung erstreckende Verbreiterung 5 aufweisen. Die Verbreiterungen und die nach unten ins Innere der Packung gerichtete Neigung der Randstege 2 sorgen dafür, dass an der inneren Mantelfläche 4 der Kolonne herablaufende Flüssigkeit ins Innere der Packung geführt wird, was den Stoffaustausch zwischen einer aufsteigenden Dampfphase und einer herabfließenden Flüssigphase intensiviert. Die Anordnung der Stege 1 in einer sich durchdringenden Gitterstruktur verstärken den Stoffaustauscheffekt zusätzlich.

In dem dargestellten Beispiel sind die Randstege 2 in drei Gruppen angeordnet, die in Fig. 1 mit den Bezugszeichen 2a, 2b und 2c bezeichnet sind. Die Randstege 2 jeder Gruppe sind in axialer Richtung in derselben Ebene mit ihren verbreiterten Rändern mit der inneren Mantelfläche 4 der Kolonne verbunden. Die Randstege der Gruppen 2a und 2b befinden sich dabei in derselben Ebene, während die Randstege der Gruppe 2c weiter unten, also in die Zeichenebene hinein, angeordnet sind. Wie in Fig. 1 zu erkennen, erstrecken sich einige der Verbreiterungen der Randstege 2 in Umfangsrichtung über Stege 1, die von Verbindungselemente 3 zum Rand hin verlaufen. Durch diese sich in axialer Richtung periodisch wiederholende Anordnung ist gewährleistet, dass an der Innenwand des Kolonnenmantels 4 herablaufende Flüssigkeit immer an irgendeiner Stelle der Packung auf einen Randsteg 2 gelangt, der die Flüssigkeit ins Innere der Kolonne leitet.

Die dargestellte Struktur kann vorteilhaft durch ein additives Fertigungsverfahren wie den 3D-Druck hergestellt werden. Vorzugsweise werden dabei der Kolonnenmantel 4, die Verbindungselemente 3, die Randstege 2 und die Stege 1 gemeinsam hergestellt, sodass die Packung und der die Packung umschließende Abschnitt der Kolonne integral hergestellt sind.

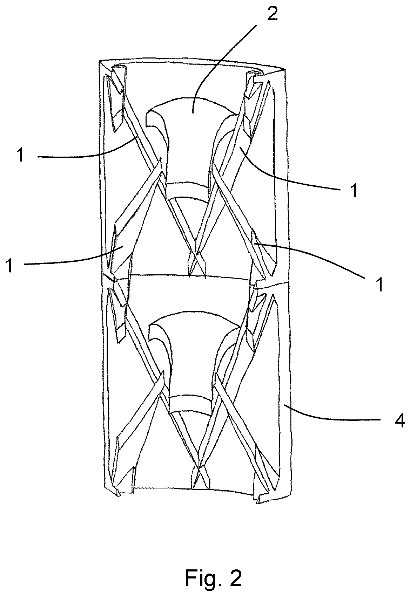

Fig. 2 zeigt in einer schematischen Darstellung einen Längsschnitt durch eine Kolonne mit einer strukturierten Packung gemäß einer Ausführungsform der Erfindung. Der dargestellte Teil der Kolonne mit Packung stellt ein Viertel des zylindrischen Kolonnenmantels dar, wobei einige Elemente der Packungsstruktur wie manche Stege 1 im Inneren sowie die Verbindungselemente 3 der Übersichtlichkeit halber nicht abgebildet sind. Aus Fig. 2 ist die nach unten gerichtete Neigung der Stege 1 und Randstege 2 sowie die sich in axialer Richtung der Kolonne wiederholende Struktur der Packung zu erkennen. Bei den in Fig. 2 dargestellten Beispiel entspricht die Ausdehnung des verbreiterten Endes der Randstege 2 in Umfangsrichtung etwa dem Doppelten der Breite der Randstege 2 an ihrem dem Packungsinneren zugewandten Ende. Flüssigkeit, die von der Innenwand des Kolonnenmantels 4 von oben auf die Randstege 2 fließt, wird auf der nach oben weisenden Oberfläche der Randstege 2 sowohl in Richtung des Packungsinneren als auch zur Seite in Richtung darunterliegender, sich kreuzender Stege 1 im Inneren der Packung geleitet, was eine breite Verteilung und intensive Vermischung der sich in der Packungsstruktur befindlichen Flüssigkeit begünstigt.

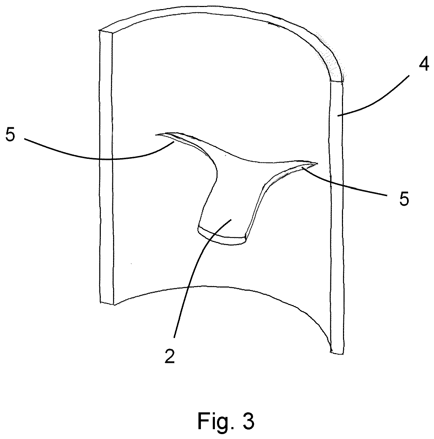

Fig. 3 zeigt in einer schematischen Darstellung einen Längsschnitt durch eine Kolonne mit einer Ansicht einer weiteren Ausführungsforme eines Randsteges. Zu besseren Darstellung des Randsteges sind keine weiteren Elemente der Packung dargestellt. Bei dem in Fig. 3 dargestellten Randsteg 2 erstrecken sich die Verbreiterungen 5 in Umfangsrichtung weiter als bei der mit Bezug zu Fig. 2 dargestellten Ausführungsform. In axialer Richtung verlaufen die Verbreiterungen 5 von ihren Enden ausgehend nach unten zum Randsteg, mit dem sie verbunden sind. Bei dieser Ausführungsform wird ein größerer Anteil der an der Innenwand des Kolonnenmantels 4 herablaufenden Flüssigkeit von den Verbreiterungen 5 aufgefangen und über die Randstege 2 in das Innere der Packung geleitet.

Die in Fig. 3 dargestellte Ausführungsform von Randstegen 2 kann auch mit den in Fig. 1 und Fig. 2 dargestellten Ausführungsform von Packungsstrukturen kombiniert werden. So können sich beispielsweise in axialer Richtung Randstege des in Fig. 2 dargestellten Typs mit solchen gemäß Fig. 3 abwechseln. Durch eine entsprechend ausgelegte Anordnung von unterschiedlichen Arten von Randstegen und Verbreiterungen kann die von der Innenwand des Kolonnenmantels aufgenommene Flüssigkeit gezielt in bestimmte Bereiche des Packungsinneren geleitet und somit die Eigenschaften der Packung in Bezug auf den Stoffaustausch zwischen Dampfphase und Flüssigphase entsprechend den jeweiligen Anforderungen gewählt werden.

### Beispiel

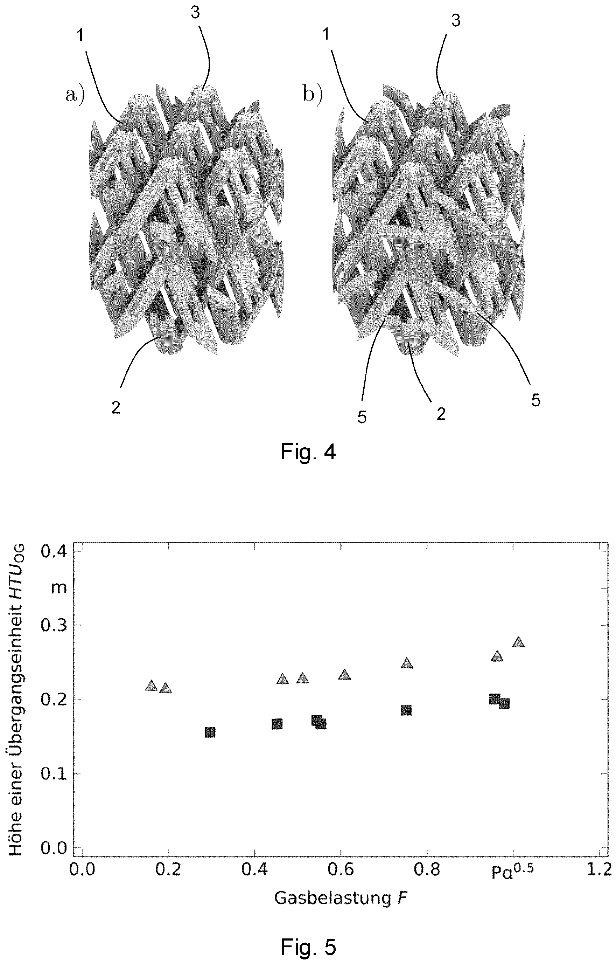

Fig. 4 zeigt in einer dreidimensionalen Darstellung auf der rechten Seite mit (b) bezeichnet einen Abschnitt einer Packung, wie sie in Bezug auf die Darstellung in Fig. 1 oben als erfindungsgemäße Ausführungsform beschrieben wurde. Der Übersichtlichkeit halber sind nur einige Bezugszeichen für gleichartige Bestandteile der Packung angegeben. Deutlich erkennbar sind die Verbreiterungen 5 an den Randstegen 2, die im eingebauten Zustand der Packung an der Innenfläche des Kolonnenmantels anliegen oder mit dieser verbunden sind.

Auf der linken Seite der Fig. 4 ist mit (a) bezeichnet ein Abschnitt einer Packung dargestellt, die in Bezug auf die Anzahl und Anordnung der Stege 1, Randstege 2 und Verbindungselemente 3 der Ausführungsform auf der rechten Seite in Fig. 4 entspricht, jedoch keine Verbreiterungen an den Randstegen 2 aufweist.

In eine Laborkolonne mit einem Innendurchmesser von 20 mm wurde zunächst eine Packung ohne Verbreiterungen wie auf der linken Seite in Fig. 4 dargestellt eingebaut. Der Außendurchmesser der Packung entsprach dem Innendurchmesser der Kolonne. Die Länge der Packung betrug 99 cm.

Als Testgemisch wurden etwa drei Liter einer Mischung aus Cyclohexan und n-Heptan verwendet. Diese wurden im Sumpf der Kolonne vorgelegt. Nach Inertisierung der Kolonne mit Stickstoff wurde die Heizleistung des Verdampfers langsam erhöht, bis sich erste Destillattropfen am Kondensator der Kolonne bildeten. Das nun anfallende Destillat wurde vollständig als Rücklauf auf den Kopf der Kolonne gegeben. Um eine initiale vollständige Benetzung der Packung zu erreichen, wurde die Heizleistung langsam bis zum Fluten der Kolonne erhöht und danach auf Solllast gesenkt. Für die Messung der Trennleistung wurde der gewünschte F-Faktor durch Anpassen der Heizleistung eingestellt und Proben aus dem Destillat und unterhalb des Packungsbetts genommen.

Der Druck am Kopf der Kolonne betrug 1 bar(abs). Die Höhe einer Übertragungseinheit wurde aus den gemessenen Konzentrationen der Proben, der Packungshöhe (H) und den Gleichgewichtsdaten für das Teststoffsystem als HTU = H / NTU berechnet, wobei die Zahl der Übertragungseinheiten (NTU) durch Verwendung einer mittleren relativen Flüchtigkeit im betrachteten Konzentrationsintervall über die bekannten Beziehungen für ein ideales Gemisch ermittelt wurde.

In einem weiteren Versuch wurde anstelle der Packung ohne Verbreiterungen die in Fig. 4 b) auf der rechten Seite dargestellte Packung mit Verbreiterungen im selben Versuchsaufbau bei denselben Versuchsbedingungen getestet.

Fig. 5 zeigt die Ergebnisse der Messungen aus den Versuchen im Vergleich. Die als Dreiecke dargestellten Messergebnisse beziehen sich auf die Versuche mit der Packung ohne Verbreiterungen gemäß Fig. 4 a). Die als Quadrate dargestellten Messergebnisse beziehen sich auf die Versuche mit der Packung mit Verbreiterungen an den Randstegen gemäß Fig. 4 b). Wie Fig. 5 klar zu entnehmen ist, ist der HTU-Wert bei derselben Gasbelastung für die Packung ohne Verbreiterungen in allen Fällen höher als für die Packung mit Verbreiterungen. Die Werte für die Packung mit Verbreiterungen liegen durchschnittlich 6,5 cm unter denen für die Packung ohne Verbreiterungen. Die Packung gemäß der erfindungsgemäßen Ausführungsform mit Verbreiterungen an den Randstegen ist daher im Hinblick auf die zu erzielende Trennleistung deutlich effizienter als die Vergleichspackung ohne Verbreiterungen.

## Patentansprüche

1. Strukturierte Packung für eine Kolonne, wobei die Packung ein Gitter aus Stegen (1, 2) umfasst, die unmittelbar und/oder über Verbindungselemente (3) miteinander verbunden sind, der äußere Rand der Packung zumindest abschnittsweise von Randstegen (2) gebildet ist, die nach unten geneigt ins Innere der Packung verlaufen und an ihrem den Rand der Packung bildenden äußeren Ende eine sich in Umfangsrichtung erstreckende Verbreiterung (5) aufweisen.

2. Packung nach Anspruch 1, **dadurch gekennzeichnet, dass** der Außendurchmesser der Packung von 5 mm bis 30 mm, bevorzugt von 10 mm bis 25 mm beträgt.

3. Packung nach einem der vorhergehenden Ansprüche, **dadurch gekennzeichnet, dass** die nach oben weisende Oberfläche der Randstege (2) quer zu ihrer nach unten geneigten Verlaufsrichtung von der Mittellinie der Oberfläche zu ihren Seiten hin nach unten geneigt ist.

4. Packung nach einem der vorhergehenden Ansprüche, **dadurch gekennzeichnet, dass** die Neigung der Randstege (2) in Richtung des Packungsinneren gegenüber der Horizontalen von 1° bis 75°, bevorzugt von 10° bis 45° beträgt.

5. Packung nach einem der vorhergehenden Ansprüche, **dadurch gekennzeichnet, dass** das äußere Ende der Verbreiterung (5) eines Randstegs (2) in Umfangsrichtung dem 0,05-Fachen bis 0,3-Fachen, bevorzugt dem 0,09-Fachen bis 0,25-Fachen des Umfangs der äußeren Umhüllenden um die Packung entspricht.

6. Packung nach einem der vorhergehenden Ansprüche, **dadurch gekennzeichnet, dass** die Randstege (2) an ihrem äußeren Ende Auskragungen aufweisen, die sich in Umfangsrichtung zu beiden Seiten der Randstege erstrecken.

7. Packung nach einem der vorhergehenden Ansprüche, **dadurch gekennzeichnet, dass** mehrere Stege (1) und mehrere Randstege (2) in mindestens zwei Gruppen übereinander und in Umfangsrichtung versetzt zueinander angeordnet sind, sodass über und/oder unter einem Steg (1) einer ersten Gruppe ein Randsteg (2) einer zweiten Gruppe angeordnet ist.

8. Packung nach einem der vorhergehenden Ansprüche, **dadurch gekennzeichnet, dass** die Gitterstruktur der Packung n-zählig rotationssymmetrisch ist, wobei n eine natürliche Zahl von 2 bis 8, bevorzugt von 3 bis 6 ist.

9. Kolonne umfassend mindestens eine Packung gemäß einem der Ansprüche 1 bis 8, **dadurch gekennzeichnet, dass** die Randstege (2) an ihrem äußeren Rand mit der inneren Mantelfläche (4) der Kolonne verbunden sind.

10. Kolonne nach Anspruch 9, **dadurch gekennzeichnet, dass** der Abschnitt der Kolonne, in dem die mindestens eine Packung angeordnet ist, und die mindestens eine Packung integral hergestellt sind, bevorzugt durch ein additives Fertigungsverfahren.
